# EUROPEAN PATENT APPLICATION

(11) **EP 1 122 219 A1**
(43) Date of publication of application: **08.08.2001**
(21) Application number: 00200392.9
(22) Date of filing: 04.02.2000
(51) Int. Cl.: C03C 1/00, C03C 6/00

(54) **New oxidising agent for the production of glass**

(71) Applicant: Nederlandse Organisatie voor toegepast-natuurwetenschappelijk Onderzoek TNO, 2628 VK Delft (NL)
(72) Inventor: Van Kersbergen, Marinus Jacob, 5642 AR Eindhoven (NL); Faber, Anne Jans, 5508 MP Veldhoven (NL)
(74) Representative: Jorritsma, Ruurd

(57) **Abstract**

The present invention relates to a process for the production of glass which process comprises melting a raw materials mixture containing quartz sand and one or more of Na₂CO₃, K₂CO₃, CaCO₃, MgCO₃·CaCO₃, Al₂O₃, Fe₂O₃, glass cullet, additives and oxidising agents, wherein an alkali peroxide is used as the oxidising agent. Preferably sodium peroxide is applied as the oxidising agent.

## Description

The present invention relates to a novel process for the production of glass, wherein a new oxidising agent is used.

The production of glass is a process which has been used for a long time. The main ingredient for the production of most oxide glasses is SiO₂. Depending on the type of glass to be produced, other oxides like Na₂O, K₂O, CaO, MgO, Al₂O₃, Fe₂O₃ can be present in the glass. A large part of the primary raw materials (sand, soda, limestone, etc.) can be replaced by (recycled) glass cullet.

Beside the ingredients mentioned above, specific additives can be added to modify the properties of the glass obtained. One particular type of additives are oxidising agents. These oxidising agents are added to modify the colour of the final glass product by oxidising colouring ions to a higher valency state, or to oxidise any organic material that can be present in the raw materials batch and in the (recycled) glass cullet. Conventionally as oxidising agents sodium sulphate (Na₂SO₄) and sodium nitrate (NaNO₃) are used. For instance, in US 5,897,678 it is described that BaO₂ or NaNO₃ can be added to suppress development of yellow colour caused by the addition of TiO₂.

The drawback of sodium sulphate as the oxidising agent is that at the high temperatures used for glass melting, it releases sulphur dioxide gas that will be emitted to the air by the off gases. A further drawback of the use of sodium sulphate is that it will cause foam formation in the glass furnace, resulting in a decrease in radiation heat transfer from the combustion chamber. The drawback of sodium nitrate is that it forms nitrogen oxides (NOₓ) that are harmful to the environment. The drawback of BaO₂ is that it decomposes at a relatively high temperature (around 800 °C), which makes it less suitable to efficaciously oxidise organic components in the raw materials and cullet in an early stage (< 700 °C) of the melting process.

The object of the present invention is to provide an oxidising agent that does not suffer from the drawbacks mentioned above. The first object is therefore to provide an oxidising agent that is not harmful to the environment. A further object is that the oxidising agent should be suitable for different types of oxide glasses, without causing unwanted emissions to air and unwanted foam formation on the glass melt in industrial glass tanks.

The present invention therefore provides a process for the production of glass which process comprises melting a raw materials mixture containing quartz sand and one or more of Na₂CO₃, K₂CO₃, CaCO₃, MgCO₃·CaCO₃, Al₂O₃, Fe₂O₃, glass cullet, additives and oxidising agents, characterised in that an alkali peroxide is used as the oxidising agent.

By alkali peroxide, sodium peroxide, potassium peroxide or lithium peroxide is meant. Preferably the alkali peroxide is sodium peroxide.

The alkali peroxide is added to the mixture for the production of the glass in an amount of 0.1 to 5 wt.%, based on the total weight of the mixture.

The use of an alkali peroxide is particularly advantageous when recycled glass is used. These oxidising agents are particularly added when recycled glass is used as a starting material, because recycled glass often contains small amounts of organic material such as paper, plastic, food residues, etc, which negatively influence the melting and fining process of glass and which might result in a change of colour of the end product. The recycled glass cullet can be added to the batch mixture in an amount of 0 to 100 wt.% based on the total weight of the mixture.

The starting materials for use in the production of glass according to the present invention can be any starting materials known in the art. As mentioned above the most commonly used starting materials include quartz sand, Na₂CO₃ (soda), K₂CO₃, CaCO₃ (limestone), MgCO₃·CaCO₃ (dolomite), Al₂O₃ and Fe₂O₃. These starting materials result in glass containing SiO₂, Na₂O, K₂O, CaO, MgO, Al₂O₃ and Fe₂O₃. Of course, also other precursors of these oxides can be used as raw materials, such as for instance NaOH.

It is also possible to combine the oxidising agent of the present invention with conventional oxidising agents. For instance a mixture of sodium peroxide and sodium nitrate can also be used.

Examples of glass types in which the alkali peroxide can be used as oxidising agent are: container glass, floatglass, TV screen and conus glass, fibre glass, crystal glass, etc.

An example of a glass mixture containing the oxidising agent of the invention is a mixture suitable for container glass:

| | |
|---|---|
| SiO₂ | 70 to 75 grams/100 grams glass |
| Na₂CO₃ | 17 to 26 grams/100 grams glass |
| CaCO₃ | 14 to 20 grams/100 grams glass |
| MgCO₃ | 0 to 10 grams/100 grams glass |
| Al₂O₃ | 0 to 3 grams/100 grams glass |
| Fe₂O₃ | 0.02 to 0.4 grams/100 grams glass |
| Na₂O₂ | 0.1 to 5 grams/100 grams glass |

The glass according to the invention can be produced by means of a conventional process using equipment known in the art. According to such a process a mixture containing the glass ingredients is heated to a temperature of 1400 to 1500 °C in order to melt the mixture.

## Claims

1. Process for the production of glass which process comprises melting a raw materials mixture containing quartz sand and one or more of Na₂CO₃, K₂CO₃, CaCO₃, MgCO₃·CaCO₃, Al₂O₃, Fe₂O₃, glass cullet, additives and oxidising agents, characterised in that an alkali peroxide is used as the oxidising agent.

2. Process according to claim 1, wherein the alkali peroxide is sodium peroxide.

3. Process according to claim 1 or 2, wherein the alkali peroxide is added to the mixture in an amount of 0.1 to 5 wt.%, based on the total weight of the mixture.

4. Process according to any of claims 1 to 3, wherein (recycled) glass cullet is added to the mixture.

5. Use of an alkali peroxide in the production of glass.

6. Use according to claim 5, wherein the alkali peroxide is sodium peroxide.
